# EUROPEAN PATENT SPECIFICATION

(11) **EP 1 807 918 B1**
(45) Date of publication and mention of the grant of the patent: **16.05.2012**
(21) Application number: 05801300.4
(22) Date of filing: 14.10.2005
(51) Int. Cl.: H02G 9/04

(54) **IMPROVEMENTS IN AND RELATING TO TRUNKING**
VERBESSERUNGEN EINES KABELKANALSYSTEMS
AMELIORATIONS CONCERNANT L'ACHEMINEMENT ET RELATIVES A CELUI-CI

(30) Priority: 15.10.2004 GB 0422958
(43) Date of publication of application: 18.07.2007
(73) Proprietor: Trojan Services Limited, Manchester M2 2AS (GB)
(72) Inventor: WELLENS, Stewart, Lytham St Annes,Lancashire FY8 1SR (GB)
(74) Representative: Davies, Robert Ean
(86) International application number: PCT/GB2005/003952
(87) International publication number: WO 2006/040567

(56) References cited:
- EP-A- 0 772 271
- WO-A-94/01907
- DE-U1- 29 617 125
- PATENT ABSTRACTS OF JAPAN vol. 2003, no. 11, 5 November 2003 (2003-11-05) -& JP 2003 199224 A (KAWADA CONSTRUCTION CO LTD), 11 July 2003 (2003-07-11)

## Description

The present invention concerns improvements in trunking systems used to accommodate and route cabling, particularly, but not exclusively, used in railway signalling and communication applications. Embodiments of the invention may also find uses in situations where cabling would otherwise be exposed and vulnerable to vandalism or accidental damage.

Prior art cable trunking systems, used particularly in railway environments for accommodating and routing lengths of cable used in signalling and communication, traditionally comprise generally U-shaped concrete conduits having a further concrete lid attached thereto. These concrete conduits generally run alongside railway lines and provide a relatively secure environment in which the cables used to carry communications and signalling signals can be accommodated.

However, there are certain problems associated with the use of such concrete trunking systems. In particular, each section of concrete conduit, weighs approximately 50 kilograms, meaning that it generally requires a team of two people to lift and position each section of conduit. In the light of widespread safe manual lifting guidelines, such heavy units are likely to become increasingly unpopular, requiring as they do, a greater number of people to install them than is ideal.

A further problem with such concrete units is that they do not offer a particularly high degree of security to the cabling carried therein. The locking mechanisms associated with such prior art concrete trunking systems are retro-fitted and difficult to install. Therefore not all the troughs have these fittings. This renders the concrete trunking systems prone to vandalism, whereby the cabling itself may be exposed and damaged, which could result in signalling errors and consequential train accidents.

German utility model (Gebrauchsmuster) DE 296 17 125 U1 shows a cable conduit system comprising sections which may be interconnected as required to form a continuous length of conduit.

European patent application EP 0 772 271 A2 discloses a cable duct of plastics material having a base with upstanding sidewalls at opposite ends of the base forming an open ended channel for reception of cables. Means are provided at each end of the duct for releasably interlocking the duct with another duct end to end to form an extended channel for cables and the like.

The concrete construction of these prior art trunking systems renders the trunking system itself brittle and prone to damage if dropped or involved in an impact with another object.

Embodiments of the present invention aim to overcome or at least alleviate some of the problems associated with the concrete prior art trunking systems, whether mentioned herein or not.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a perspective view of an open configuration of an embodiment of the present invention;
Figure 2 shows an underside perspective view of an embodiment of the present invention, together with a lid;
Figure 3 shows a perspective view of an embodiment of the present invention together with a lid; and
Figure 4 shows a perspective view of an embodiment of the invention in the closed configuration with an alternative lid.

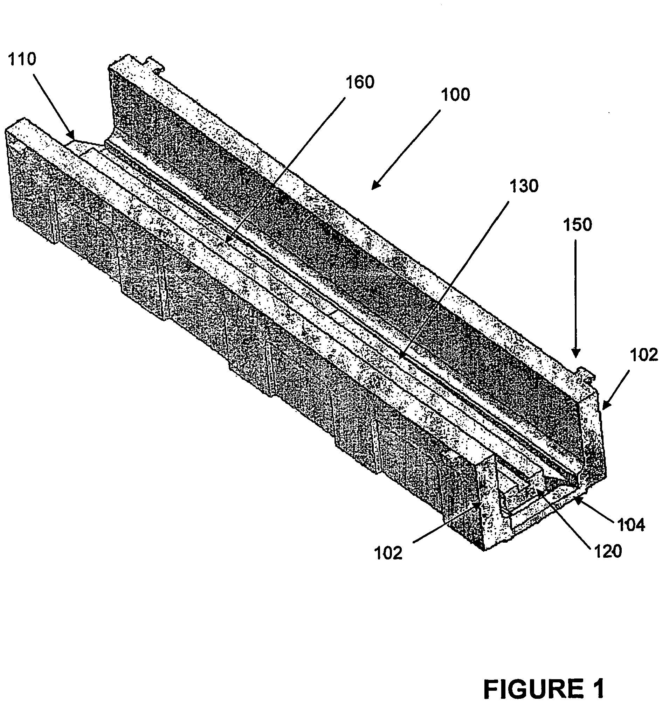

A first embodiment of the present invention is illustrated in Figure 1. This shows a section of trunking 100 used for accommodating and routing cables for use in railway or similar environments. A section of trunking 100 comprises a generally U-shaped configuration having a base area 104, from which two generally upright members 102 protrude. The U-shaped channel 160 formed by this arrangement provides the conduit in which the cables may be accommodated.

Unlike the prior art trunking system described previously, which was composed of concrete, embodiments of the present invention are advantageously manufactured from a plastics material. Preferably, the plastics material comprises a polymer which is recycled. Preferred polymers include low density polyethylene.

A suitable manufacturing process to produce the trunking sections 100 is compression or injection moulding using standard techniques.

Multiple trunking sections 100 are intended to be laid end to end to create a significant length of trunking for accommodating cabling. To allow individual sections of trunking 100 to be interlocked, each section is provided with a protrusion 110 from one end of base 104 for engagement with a mating recess 120 at the other end. The protrusion 110 extends from the base 104 in a lateral direction. It includes a first portion which extends downwardly so as to engage with the recess 120. When laying the trunking sections 100, protrusion 110 is simply inserted into recess 120 to link any two adjacent sections together. The shape and configuration of protrusion 110 and recess 120 may be arranged such that a snap-fit connection is achieved, which allows a semi-permanent connection of any two ore more sections.

In the event that a shorter section of trunking is required for a particular location, the plastics material of the trunking sections allows a regular electric saw to be used to cut any particular section 100 to the required size. This contrasts sharply with the prior art trunking systems where a specialised saw for cutting through concrete, with the associated noise and safety issues, pose particular problems. In such an instance, it would not be possible to connect the sections using the integral connectors 110, 120, and so adjacent sections of trunking will be butted up to each other as per the prior art concrete sections.

Since the trunking sections 100 are manufactured from a plastics material, they are considerably lighter than the prior art concrete devices. In particular, individual sections of trunking 100 can be configured to weigh less than 20 kilograms. This weight is important, as current Health and Safety Executive recommendations, in the UK at least, impose a limit of 20 kilograms on the weight that may be repetitively lifted by a single person.

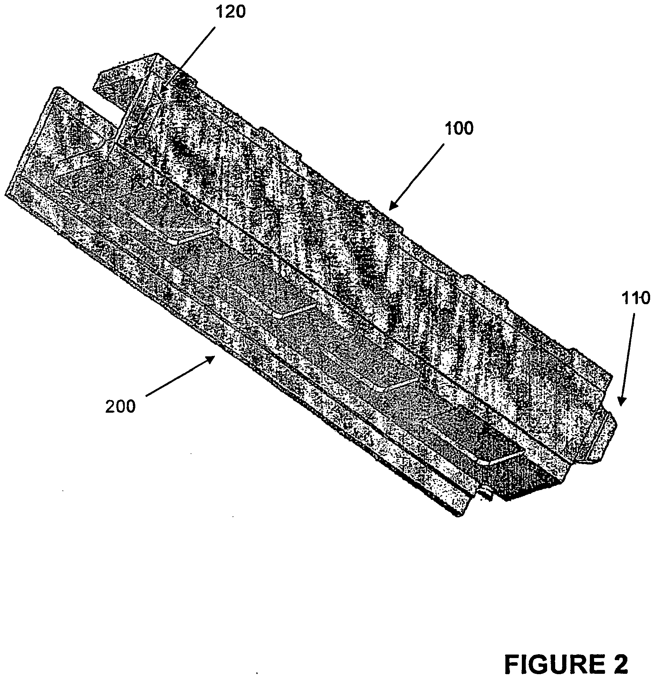

Figure 2 shows an underside view of the trunking section 100 of Figure 1. This view more clearly shows protrusion 110 and recess 120 and illustrates how they facilitate simple connection between adjacent sections 100.

This view also shows lid 200. The lid section 200 is substantially the same length as the trunking section 100 and fits simply into the top of the u-shaped channel 160. It includes a central section which extends some way into channel 160 to ensure a good fit.

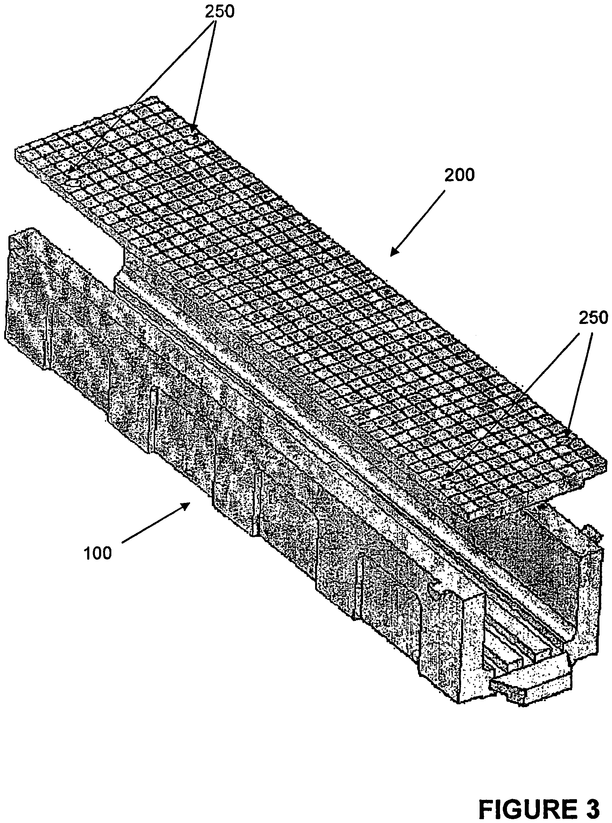

Figure 3 shows a top perspective view of the view shown in Figure 2. In this view, it can be seen that the lid 200 is provided with a non-slip surface created by an engraved grid pattern on its upper surface. This may be formed at the moulding stage. In this way, a plurality of such trunking sections can be connected together and used as a footpath, if appropriate.

Figure 3 also shows a plurality of locking screws 250 which can be used to secure the lid 200 firmly to the trunking section 100. In the particular embodiment shown in Figure 3, four such locking screws 250 are provided, but different numbers, or indeed none at all, may be provided in different instances. The locking screws 250 are preferably provided in a format requiring a special tool fo r locking and unlocking them to prevent unauthorised access to the interior of the trunking system. The screws 250 pass through a hole in the lid and engage with a mating aperture(not shown) in the top flat surface of upright member 102. The use of a special tool renders the fixing of the lid more secure than would be the case if a regular screw were used.

A further problem encountered with prior art devices is a tendency for the trunking system to fill with water during inclement weather. Over time, this can cause degradation of the trunking system itself and possibly the cabling contained therein.

Embodiments of the present invention can be configured to provide integrated drainage channels 130 as shown in Figure 1. Here, it can be seen that the drainage channel 130 has a peak at approximately the centre of the trunking section 100 and slopes downwards towards each end of the trunking section. In this way, any water which does enter the trunking section 100 tends to drain down the drainage channel 130 and out of the trunking section via recess 120 even when coupled to protrusion 110. However, once the lid 200 is securely attached to the trunking section 100, it is less likely that water will enter the trunking system than in prior art devices in any case.

Since the general dimensions, particularly the width and depth of the trunking sections 100 are substantially the same as prior art concrete trunking sections, embodiments of the invention may be used in a backward compatible fashion with existing prior art trunking sections. Therefore, there is no requirement to scrap existing systems if only one or a small number of individual sections require replacement. This is important in the case where there is a large legacy stock of prior art trunking systems in use.

Since the trunking systems according to embodiments of the invention are manufactured from plastics materials, they may be configured to be virtually any colour desired. This can result in a colour coded cabling system whereby signalling cables may be carried in one colour of trunking and general communications cabling may be carried in a different colour. Of course, the variations are limited only by the range of colours available.

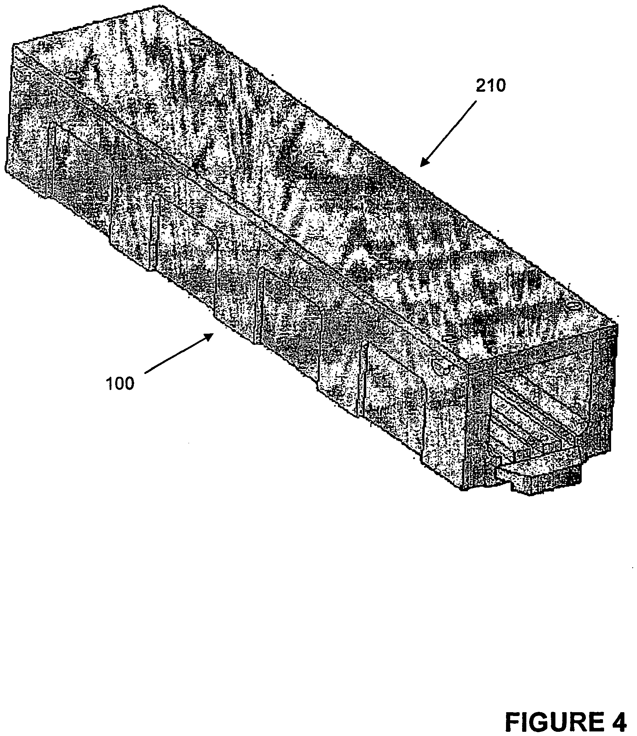

Figure 4 shows a fully assembled section of trunking 100 including a fitted lid 210. In this particular embodiment, the lid does not include the non-slip surface shown previously in Figure 3. This figure clearly shows the entirely sealed nature of the trunking section once the lid 210 has been securely attached.

Since trunking systems according to embodiments of the invention and the prior art are generally laid alongside stretches of railway track, a problem is encountered when the stretch of track in question curves. Even though railway tracks generally cannot accommodate sharp turns, the radius of curvature on a typical curved section can be of the region of a few tens of metres to several hundred metres, or more.

In the prior art, the concrete sections are simply placed to follow the curve of the track alongside which they run. As such, there is a clear gap between the sections on the outside of the curve.

In order to create a curved length of sections according to an embodiment of the invention, it is possible to simply remove projection 110 using a cutting tool, so that adjacent sections can be simply butted up against one another as in the prior art.

Alternatively, and preferably, alternative sections can be provided having a suitable degree of curvature. Clearly, the curvature required can lie anywhere in the range mentioned previously, and it would generally be impractical to provide different sections to cover all possibilities. A preferred solution therefore relies on the provision of single curved section having a given radius of curvature. If the selected radius is sufficient to cope with the sharpest bend likely to be encountered, then more shallow bends can b e accommodated by interspersing straight sections of trunking with the curved section, so that an approximated curve is produced.

Clearly, a suitably curved lid is also required, in order to take full advantage of the curved trunking sections. By use of straight and curved sections in the way described, it is possible to create any given degree of curvature, and by use of curved lids where appropriate, the interior of the trunking sections can be maintained in a secure state, unlike the situation in the prior art.

As can be seen, embodiments of the invention therefore offer several advantages over prior art trunking systems manufactured from concrete. Embodiments of the inventions are lighter, stronger, less vulnerable to vandalism, allow for cheaper transportation, handling and installation, can be installed easily without specialised equipment, are backward compatible with existing systems, and can be manufactured in a range of colours if required.

## Claims

1. A trunking section (100) for carrying cables, wherein the trunking section defines a channel (160) and comprises mutually interlocking parts (110, 120) allowing two or more sections to be semi-permanently connected and wherein the trunking section is substantially composed of a plastics material, **characterised in that** the interior of the channel comprises a sloped drainage channel (130) having a peak at approximately the center of the trunking section (100) and sloping downwards towards each end of the trunking section in oder to allow water which enters the channel to drain through the base of the section.

2. A trunking section as claimed in claim 1 further comprising a lid (200) for closing the channel and securing any cables in the trunking.

3. A trunking section as claimed in claim 2 wherein the lid comprises a locking mechanism (250) for restricting access to the interior of the trunking.

4. A trunking section as claimed in any preceding claim wherein the plastics material comprises a substantial proportion of recycled low density polyethylene.

5. A trunking section as claimed in any one of claims 2 to 4 wherein the lid comprises a non-slip outer surface.

6. A trunking section as claimed in any preceding claim wherein the mutually interlocking parts comprise a protrusion (110) from a first end of the base of the section, and a recess (120), for receiving the protrusion, at a second end of the base of the section.

7. A trunking section as claimed in any preceding claim wherein the trunking section is curved such that several such sections can be interconnected to form a length of curved trunking.

8. A trunking section as claimed in claim 7 wherein a correspondingly curved lid is further provided.

## Patentansprüche

1. Kabelkanalsystemabschnitt (100) zum Führen von Kabeln, wobei der Kabelkanalsystemabschnitt einen Kanal (160) definiert und ineinandergreifende Teile (110, 120) aufweist, die es ermöglichen, zwei oder mehrere Abschnitte semipermanent zu verbinden, und wobei der Kabelkanalsystemabschnitt im Wesentlichen aus einem Kunststoffmaterial besteht, **dadurch gekennzeichnet, dass** das Innere des Kanals einen geneigten Abflusskanal (130) aufweist, der eine Spitze ungefähr an der Mitte des Kabelkanalsystemabschnitts (100) aufweist und sich nach unten in Richtung jedes Endes des Kabelkanalsystemabschnitts neigt, um zu ermöglichen, dass Wasser, das in den Kanal eintritt, durch die Basis des Abschnitts abfließt.

2. Kabelkanalsystemabschnitt nach Anspruch 1, ferner aufweisend einen Deckel (200) zum Schließen des Kanals und Sichern von Kabeln im Kabelkanalsystem.

3. Kabelkanalsystemabschnitt nach Anspruch 2, wobei der Deckel einen Verriegelungsmechanismus (250) zum Beschränken des Zugangs ins Innere des Kabelkanalsystems aufweist.

4. Kabelkanalsystemabschnitt nach einem der vorhergehenden Ansprüche, wobei das Kunststoffmaterial einen wesentlichen Anteil von recyceltem Polyethylen niedriger Dichte aufweist.

5. Kabelkanalsystemabschnitt nach einem der Ansprüche 2 bis 4, wobei der Deckel eine rutschfeste Außenfläche aufweist.

6. Kabelkanalsystemabschnitt nach einem der vorhergehenden Ansprüche, wobei die ineinandergreifenden Teile einen Vorsprung (110) von einem ersten Ende der Basis des Abschnitts und eine Aussparung (120) zur Aufnahme des Vorsprungs an einem zweiten Ende der Basis des Abschnitts aufweisen.

7. Kabelkanalsystemabschnitt nach einem der vorhergehenden Ansprüche, wobei der Kabelkanalsystemabschnitt derart gekrümmt ist, dass mehrere solche Abschnitte miteinander verbunden werden können, um eine Länge eines gekrümmten Kabelkanalsystems zu bilden.

8. Kabelkanalsystemabschnitt nach Anspruch 7, wobei ferner ein entsprechend gekrümmter Deckel vorgesehen ist.

## Revendications

1. Section de cheminement (100) pour transporter des câbles, la section de cheminement définissant un canal (160) et comprenant des parties s'emboîtant les unes dans les autres (110, 120) permettant de connecter de manière semi-permanente deux sections ou plus, et la section de cheminement étant substantiellement composée d' u n matériau plastique, **caractérisée en ce que** l'intérieur du canal comprend un canal de drainage incliné (130) ayant un pic approximativement au niveau du centre de la section de cheminement (100) et incliné vers le bas vers chaque extrémité de la section de cheminement afin de permettre à l'eau qui entre dans le canal d'être drainée à travers la base de la section.

2. Section de cheminement selon la revendication 1, comprenant en outre un couvercle (200) pour fermer le canal et fixer les câbles dans le cheminement.

3. Section de cheminement selon la revendication 2, dans laquelle le couvercle comprend un mécanisme de verrouillage (250) pour limiter l'accès à l'intérieur du cheminement.

4. Section de cheminement selon l'une quelconque des revendications précédentes, dans laquelle le matériau plastique comprend un e proportion substantielle de polyéthylène faible densité recyclé.

5. Section de cheminement selon l'une quelconque des revendications 2 à 4, dans laquelle le couvercle comprend une surface externe antidérapante.

6. Section de cheminement selon l'une quelconque des revendications précédentes, dans laquelle les parties s'emboîtant les unes dans les autres comprennent une saillie (110) à partir d'une première extrémité de la base de la section, et un retrait (120), pour recevoir la saillie, à une deuxième extrémité de la base de la section.

7. Section de cheminement selon l'une quelconque des revendications précédentes, dans laquelle la section de cheminement est courbe de telle sorte que plusieurs de ces sections puissent être reliées entre elles pour former une longueur de cheminement courbe.

8. Section de cheminement selon la revendication 7, dans laquelle un couvercle de courbure correspondante est en outre prévu.
